# EUROPEAN PATENT SPECIFICATION

(11) **EP 1 476 011 B1**
(45) Date of publication and mention of the grant of the patent: **22.08.2007**
(21) Application number: 02806657.9
(22) Date of filing: 17.12.2002
(51) Int. Cl.: A01K 61/00

(54) **CULTIVATION AND HARVESTING OF SHELLFISH**
ZUCHT UND ERNTE VON SCHALENTIEREN
ELEVAGE ET RECOLTE DE COQUILLAGES

(30) Priority: 01.02.2002 GB 0202324
(43) Date of publication of application: 17.11.2004
(73) Proprietor: Subsea Shellfish Ltd., Isle of Mull, Argyll PA66 6BT (GB)
(72) Inventor: BURGESS, Nigel, Isle of Mull, Argyll PA66 6BT (GB); SALMON, Alisdair George, Duror, Argyll (GB)
(74) Representative: Campbell, Arlene
(86) International application number: PCT/GB2002/005735
(87) International publication number: WO 2003/063583

(56) References cited:
- EP-A- 0 480 114
- WO-A-01/65925
- WO-A-91/17653
- WO-A-98/32330
- WO-A-99/41976
- GB-A- 2 302 525
- US-A- 5 193 481
- US-A- 5 477 813
- US-A- 5 515 813
- US-A- 5 549 076
- US-A- 5 617 813
- US-B1- 6 234 717

## Description

This invention relates to cultivation and harvesting of shellfish, and relates more particularly but not exclusively to equipment for the cultivation and harvesting of sessile bivalvia or other sedentary marine creatures or plants.

In previously published British patent GB2302525B the present applicants have described a submersible platform and related method for use in fish-farming and particularly, though not exclusively, the farming of shellfish such as mussels, oysters, scallops and like marine molluscs. GB2302525B included a description of a method of harvesting shellfish cultivated on the platform, which method included the steps of dislodging a tray from the platform and then winching the tray onto a catamaran-type harvesting vessel. The present invention provides improved equipment for cultivation and/or harvesting of cultivated sessile bivalvia or other sedentary marine creatures, and also provides an improved form of cultivating platform for aquatic cultivation of sessile bivalvia or other sedentary marine creatures.

According to a first aspect of the present invention there is provided a floating platform for the cultivation of sessile bivalvia or other sedentary marine creatures or plants cultivated on ropes or nets or other substrate means suspended in water from at least one support means detachably mounted on the floating platform, the platform comprising a generally annular buoyant body free of a central hub, the body being constructed or adapted for individually detachably mounting thereon a distributed array of a plurality of support means each suspending a respective substrate means therefrom.

The platform body of the first aspect is preferably provided with controllably variable buoyancy means operable for selective adjustment of the buoyancy of the platform for compensating varying masses of marine creatures carried by the platform.

The platform body of the first aspect is preferably provided with net attachment means for the attachment of a protective net to surround the platform, substrate means carried thereby and creatures attached to the substrate means, the net being dimensioned and shaped to protect the creatures from predation. The platform of the first aspect is preferably provided with mooring attachment means for the attachment of mooring means functioning in use to moor the platform substantially at a predetermined offshore location.

According to a second aspect of the present invention there is provided marine polyculture equipment wherein a plurality of different marine species are cultivated and/or harvested within a common cultivation/harvesting site that is at least partially submerged in water, the equipment comprising fin-fish enclosure means adapted to be at least partially submerged in water during use of the equipment, and means for cultivation and/or harvesting of sedentary filter-feeding marine creatures in the water adjacent the periphery of the fin-fish enclosure means. The fin-fish enclosure means may comprise a cage that is at least partially submerged in use. Where the filter-feeding marine creatures are sessile bivalvia or other sedentary marine creature cultivated on ropes or nets or other substrate means suspended in water from at least one support means detachably mounted on a floating platform, the floating platform is a floating platform according to the first aspect of the present invention, the fin-fish enclosure means being located within the generally annular buoyant body thereof. The marine polyculture equipment may further comprise controllable immersion means for temporarily increasing the immersion depth of the fin-fish enclosure means at selected times. The marine polyculture equipment may further comprise oxygenation means for oxygenating the water in and/or adjacent the fin-fish enclosure means. The marine polyculture equipment may further comprise wave-powered means for generating an upwelling in the ambient water, and where the equipment comprises a floating platform according to the first aspect of the present invention provided with buoyancy means, the wave-powered means may comprise diaphragm means mounted on the buoyancy means and disposed to be acted upon by waves in the surface of the water in which the buoyancy means are at least partially immersed in use.

The water within which the marine polyculture equipment is operated may be fresh water that may be retained within natural geographical features (e.g. within a lake, loch or river) or within an artificial water retaining means (e.g. within a dyked lagoon) or within a combination of such water-retaining means (e.g. within a dammed water reservoir). Alternatively, the water within which the marine polyculture equipment is operated may be sea water (e.g. within a sea-loch, fjord, or open sea).

According to a third aspect of the present invention there is provided a sea-farm comprising a plurality of floating platforms according to the first aspect of the present invention, the platforms being mutually spaced apart and distributed in an array, the platforms being retained in the array by mutually interextending tether means.

The sea-farm of the third aspect is preferably provided with mooring attachment means for the attachment of mooring means functioning in use to moor the sea-farm substantially at a predetermined offshore location.

Embodiments of the invention will now be described by way of example, with reference to the accompanying drawings wherein:
Figs. 1 and 2 are, respectively, a plan view and a side elevation of a preferred embodiment of floating platform in accordance with the invention;
Fig. 3 is a perspective view, from above, to one side, and to a slightly enlarged scale, of the platform of Figs. 1 and 2;
Fig. 4 is a perspective view corresponding to Fig. 3, of the platform of Figs. 1-3 fitted with an anti-predation net;
Fig. 5 is a perspective view from below of a floating platform in accordance with the invention, adapted for polyculture (simultaneous culture of different species);
Fig. 6 is a plan view, to a much-enlarged scale, of a cultivation tray forming a support in the platform of Figs. 1-3;
Fig. 7 is a side elevation of an arrangement of marine vessel fitted with a manipulator comprised in a preferred embodiment of cultivation and/or harvesting equipment in accordance with the present invention;
Fig. 8 is a plan view of the vessel of Fig. 7 but with the manipulator dismounted therefrom;
Fig. 9 is a perspective view, from above and to one side of the stern, of the arrangement of Fig. 6;
Fig. 10 is a perspective view, to an enlarged scale, of part of the manipulator depicted in Fig. 6;
Fig. 11 is a side elevation of a modified form of the arrangement of Fig. 6;
Figs. 12 and 13 are, respectively, a side elevation and a plan view of an outboard end of the manipulator of Fig. 11;
Figs. 14 and 15 are, respectively, a side elevation and a fragmentary plan view of a rotary mounting for the cultivation tray of Fig. 6;
Figs. 16 and 17 are, respectively, a plan view and a side elevation of the Fig. 6 arrangement in use with the manipulator positioned inboard of the vessel;
Figs. 18 and 19 are, respectively, a plan view and a side elevation of the Fig. 6 arrangement in use with the manipulator positioned outboard of the vessel;
Fig. 20 is a perspective view of the arrangements of Figs. 16/17 and 18/19 when superimposed;
Fig.21 is a sectional view of a cassette manipulator of a further embodiment;
Fig 22 is a plan view of the cassette manipulator of Fig 21, and
Fig. 23 is a plan view of a preferred embodiment of sea-farm in accordance with the invention.

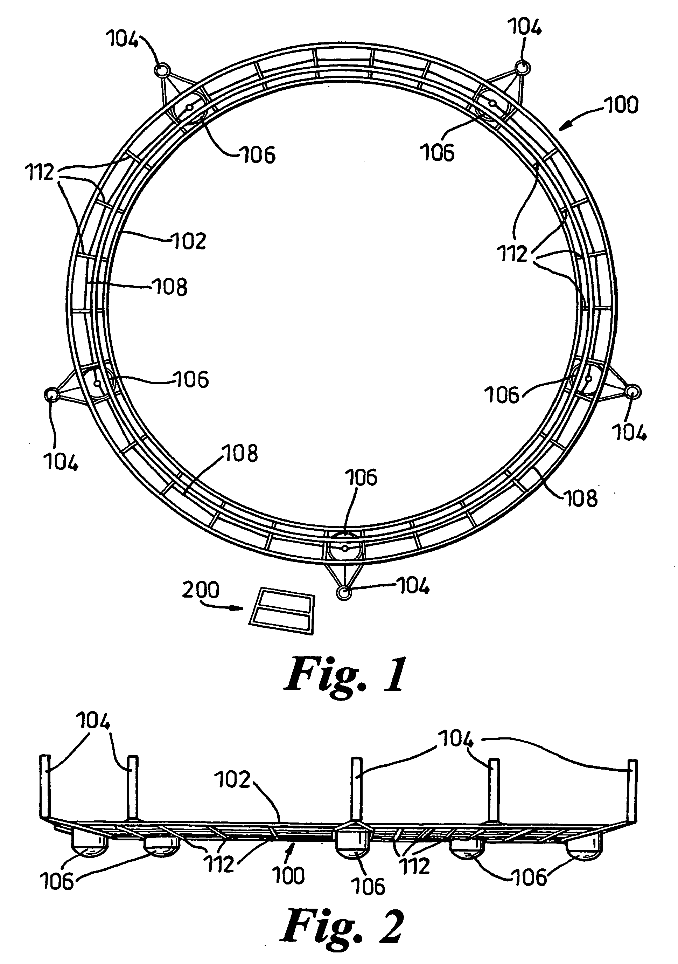

Referring first to Figs. 1 to 3, these depict a floating platform 100 for the cultivation of mussels or other sessile bivalvia (or other sedentary marine creatures) or plants. The platform 100 is formed with a body 102 that is a generally annular framework. The framework comprises two or more concentric annular tubes. Unlike the floating platform illustrated and described in GB2302525B, the platform 100 of the present invention lacks a central hub. The platform body 102 is rendered buoyant by means of being fitted with five upwardly extending outrigger-mounted spar buoys 104 with sealed hollow interiors that provide fixed buoyancy and allow the platform 100 to be totally submerged (when required), except for the upper ends of the spar buoys 104. The platform body 102 is also fitted with five spaced-apart hollow controlled buoyancy chambers 106 secured to the underside of the body 102 at equal intervals around the periphery of the annular body 102. The interiors of the chambers 106 are interconnected by an air hose 108 through which the chambers 106 can be controllably inflated or deflated so as to selectively vary the overall buoyancy of the platform 100, e.g. to compensate for increasing weight of mussels being grown on the platform 100 (as will be detailed below).

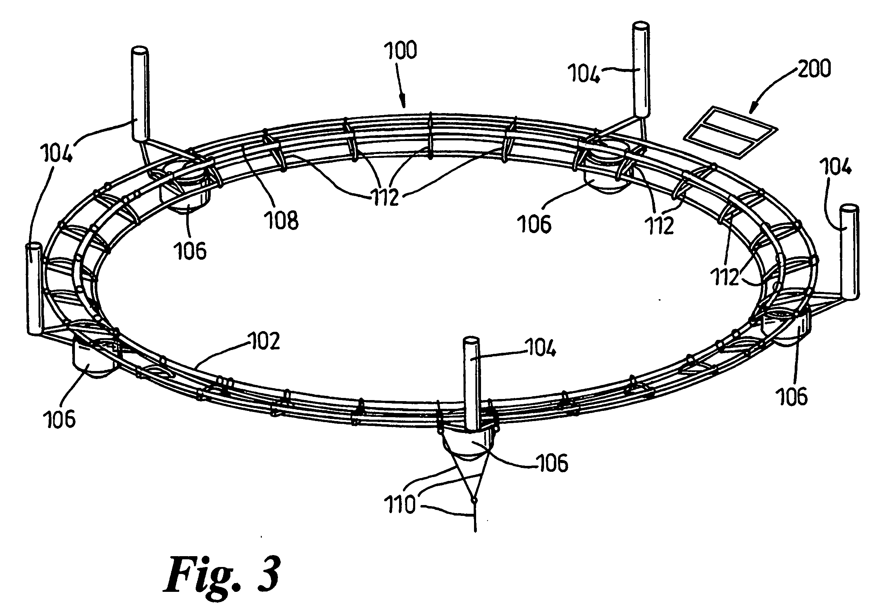

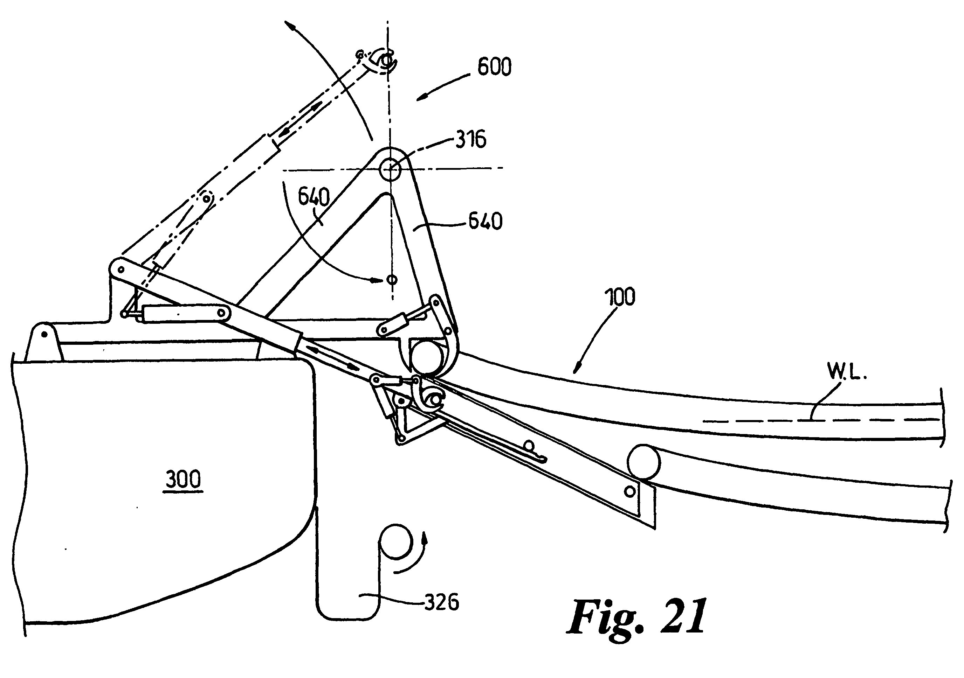

The platform 100 is moored at a predetermined location in suitably deep sea water by means of several distributed tether moorings 110, of which one only is depicted in Fig. 3. (An alternative mooring system is described below with reference to Fig. 21.)

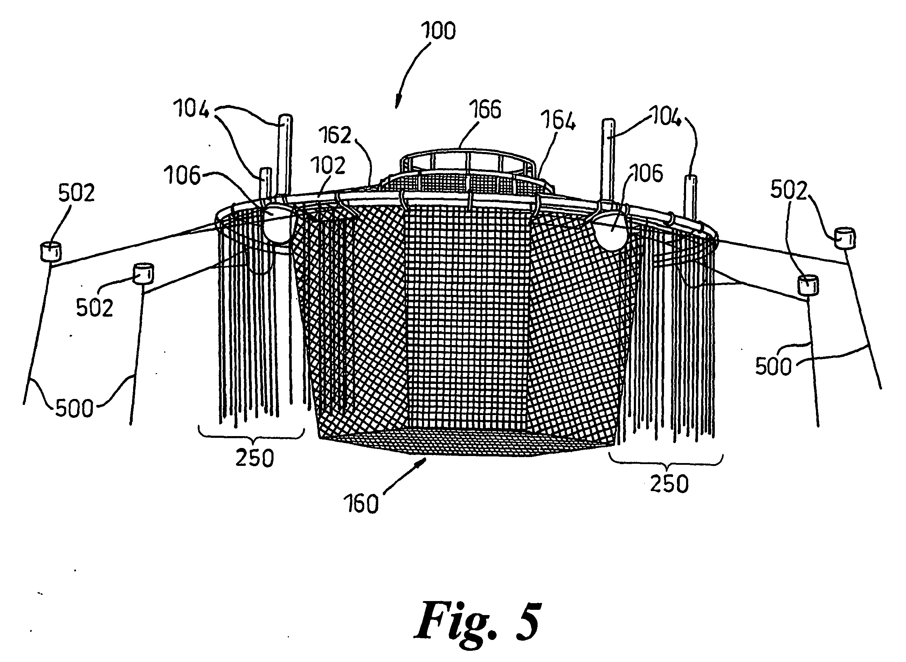

The underside of the annular framework of the platform body 102 is fitted with radially extending hanger rails 112 extending between the annular tubes to allow the detachable mounting of twenty-five cultivation trays 200, only one of which is shown (detached from the platform 100) in Figs. 1 and 3. The cultivation tray 200 will be detailed below with reference to Fig. 5. In use of the floating platform 100 for the cultivation of mussels, up to sixteen rope lines or rope ladders 250 (not shown in Figs. 1-3, but illustrated in Figs. 5, 11, 17, 19 and 20) are suspended below the cultivation trays 200 to act as substrates for the anchorage and growth of sessile mussels that feed on phytoplankton in the sea water in which the platform 100 is floating.

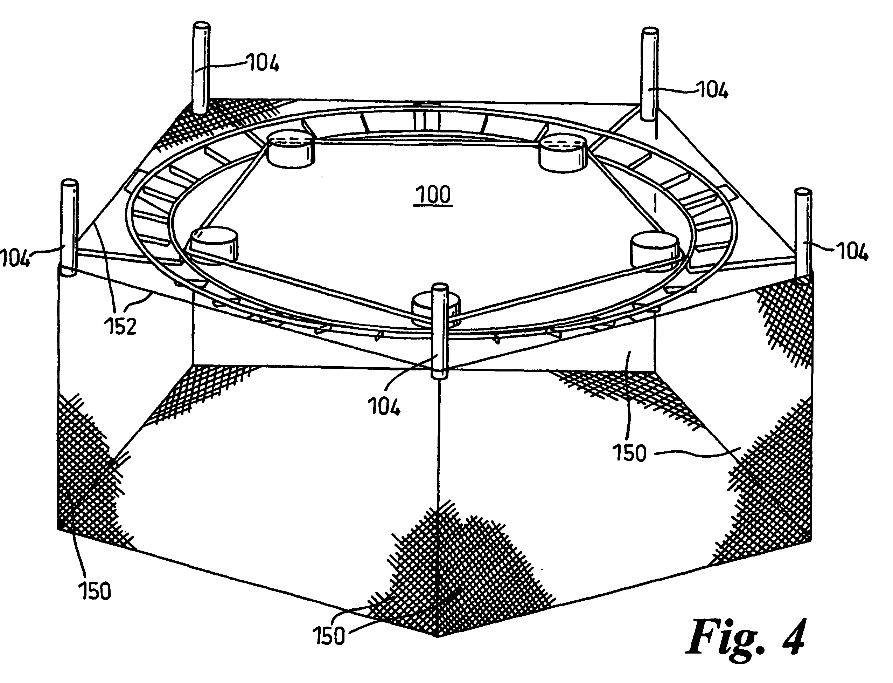

Mussels cultivated in open water are subject to attack by various predators, for example by duck that are immune from active defence measures by reason of legal protection of such species of wild bird. Therefore in order to obviate unacceptable loss of cultivated mussels to natural predators, the platform 100 is preferably entirely surrounded by a curtain net 150 as shown in Fig. 4. The anti-predation net 150 is suspended from a top edge rope or hawser 152 strung around the lower ends of the five spar buoys 104 to form a generally pentagonal floating platform assembly.

Referring now to Fig. 5, this illustrates the application of the invention to marine polyculture, i.e. the simultaneous cultivation of different marine species within the same volume of sea. Whereas the platform 100 as so far described is applicable to the cultivation and harvesting of sessile bivalvia and other sedentary marine creatures, the open centre of the annular platform body 102 can accommodate and retain a cage 160 suitable for the cultivation of suitable fin-fish that swim freely within the cage 160. The cage 160 is suitably secured to the platform body 102 to be suspended thereby in the ambient sea water. The cage 160 is fitted with a roof 162 that is centrally supported by a floating walkway 164 surrounded by a safety handrail 166. The walkway 164 carries automated feeding and monitoring systems (not shown) that are used for management of fish stocks cultivated within the cage 160.

In operation of the platform 100, the platform body 102 normally resides about 1-2 metres below the surface of the sea in which the platform 100 is floating, the exact depth being controlled by selective inflation/deflation of the buoyancy chambers 106. The outside diameter of the cage 160 at the sea surface is approximately one-third of the diameter of the outer periphery of the platform 100. When the platform 100 is submerged to its normal operating depth, only the handrail 166 and the tops of the spar buoys 104 remain above the sea surface, which minimises the visual impact of the platform 100 on the environment. During outbreaks of sea lice infestation of fin-fish being cultivated within the cage 160, the immersion depth of the cage 160 can be increased by selective operation of controllable immersion means (not shown) so as to submerge the cage 160 below the sea layer occupied by lice. The immersion depth of the cage 160 is returned to normal at a selected time after conclusion of the infestation.

The buoyancy chambers 106 can each incorporate a respective wave-powered diaphragm to generate an upwelling current in the ambient sea water. When sourced from a great depth, the upwelling can be used as a protective measure against HABs or sea lice.

When the platform 100 is adapted for polyculture by provision of the cage 160, multiple species of sea creature can be cultivated at the same marine site. Filter-feeding organisms, e.g. sessile bivalvia, being cultivated on the suspended ropes 250 can benefit from fin-fish nutrient discharges. When the cage 160 is adapted or substituted to extend fully downwards to the seabed for the cultivation of bottom-dwelling fin-fish, such fish will benefit from the shading of sunlight effected by the filter-feeding species around the bottom-dwelling fish. It is preferred that organic farming practices should be used for polycultivation of fin-fish in close proximity to bivalves and other organisms cultivated for human consumption. Additional oxygenation of sea water in and around the platform 100, together with its central cage 160, can be provided by on-site oxygenation means (not shown) when need for extra oxygenation is determined by in-cage oxygen monitoring systems.

Typical filter-feeding species include bivalves, seaweeds and sponges. Typical bottom-dwelling fish include halibut, turbot, haddock, and cod.

Cultivation trays 200 with suspended rope lines or rope ladders 250 can be retro-fitted around pre-existing fish cages, thus allowing filter-feeding organisms to act as bio-filters of fin-fish waste. The benefits of bio-remediation are important to the environmental quality of industrial sea-cage sites, and the present invention can alleviate this major hazard of commercial fish farming.

There are other advantages in employing marine polyculture in accordance with the present invention to combine two distinct branches of aquaculture, namely in synergies of infrastructure (economies of sharing and scale), footprint size (increase in consumable output for the occupation of a given area of sea), and anti-predation measures (peripheral intrusion denial protects all cultivars within the protected periphery). Where the arrangement of Fig. 5 is fitted with the anti-predation net 150 of the Fig. 4 arrangement, the net 150 will also inhibit predatory attacks by seals on fin-fish being reared in the cage 160 suspended within the otherwise open centre of the annular platform 100 for increased aquacultural productivity. (An explanation of the mooring ropes 500 and the buoys 502 depicted in Fig. 5 will subsequently be given with reference to Fig. 21).

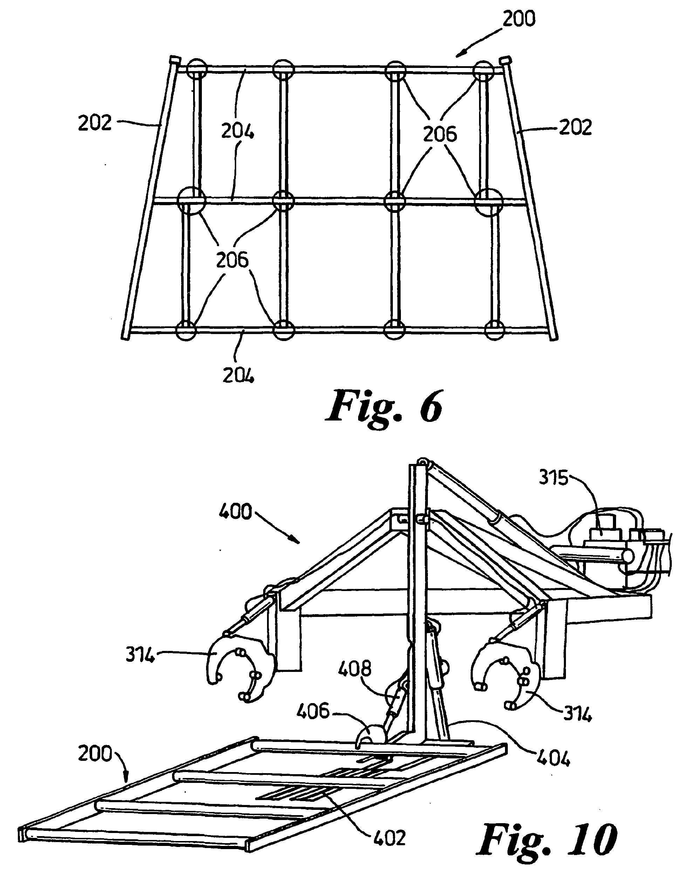

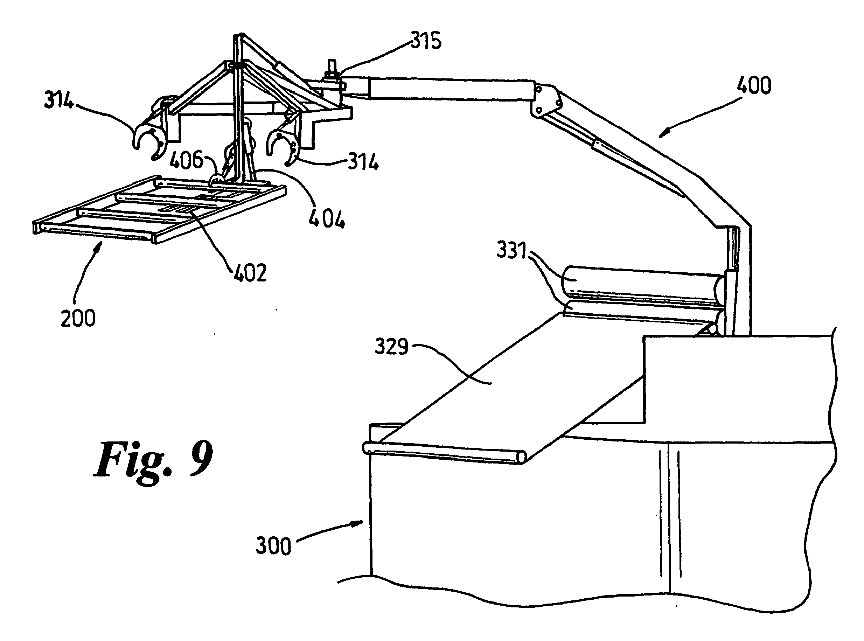

Referring now to Fig. 6, this depicts, at a much enlarged scale relative to Figs. 1-4, an individual one of the cultivation trays 200 of which up to twenty-five are normally mounted on the frame of the platform body 102. The tray 200 is generally trapezoidal in plan to fit in the mutually adjacent tray-mounting bays defined by the radially extending hanger rails 112 beneath the frame of the annular platform body 102. The tray 200 comprises two tubular side members 202 that mutually angled to fit the radially extending hanger rails 112 on the underside of the annular framework of the platform body 102. Three mutually parallel tubular cross members 204 extend between the side members 202 to provide suspension points 206 for the rope lines or rope ladders (not shown in Fig. 6) that serve as substrates for the anchorage and growth of mussels. The cultivation tray 200 can be provided with a greater or lesser number of cross members and suspension points if necessary or desirable (e.g. as shown in Fig. 9).

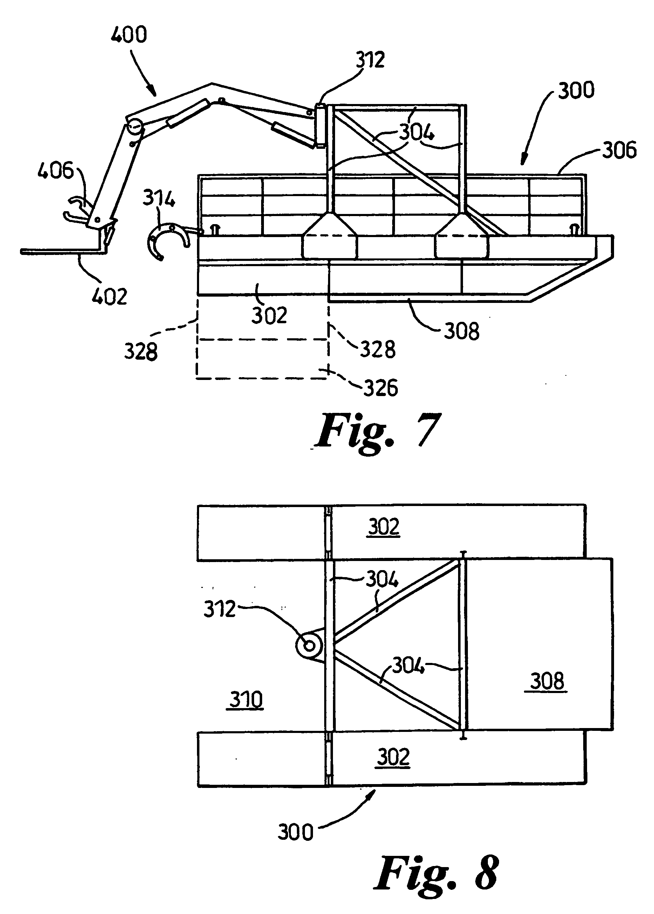

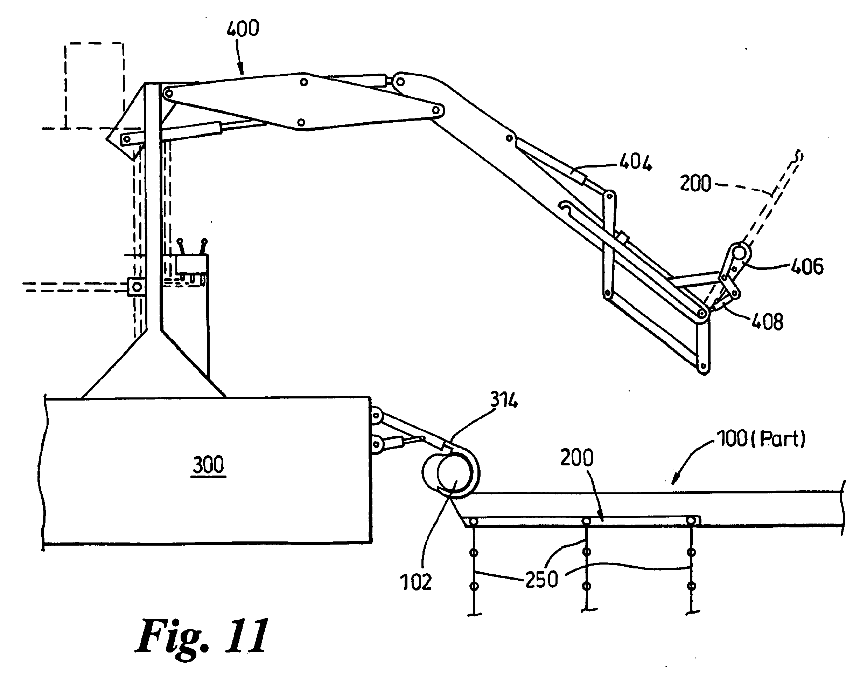

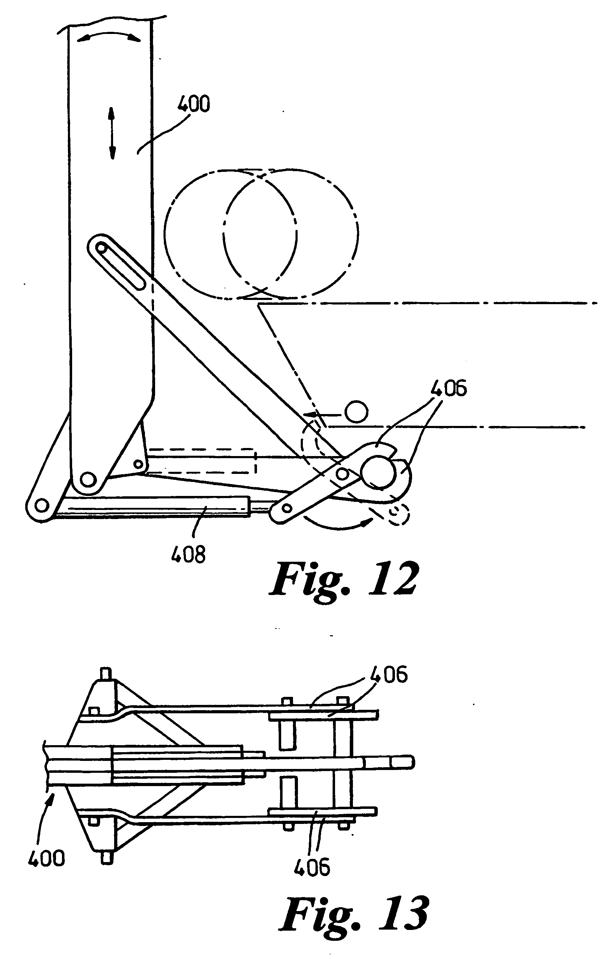

Referring now to Figs. 7 and 8, these depict, in side elevation and plan view respectively, a harvesting vessel 300 fitted with a manipulator 400 in accordance with the invention (the manipulator 400 being absent in Fig. 8). The harvesting vessel 300 is a surface-floating catamaran with parallel twin hulls 302 formed by respective pressed-steel boxes. The hulls 302 are mutually joined by a transverse frame 304. The top surfaces of the hulls 302 form deckways protected by guard rails 306. An open-top hull body 308 extends below the vessel's waterline between the centre and rear ends of the hulls 302, leaving an open bay 310 at the forward end of the vessel 300 for a purpose to be detailed below. The frame 304 extends vertically above the hulls 302 to provide a high-level vertical-axis pivot mounting 312 for the manipulator 400 (detailed in Figs. 9-13). The forward end of the vessel 300 (the left end as viewed in Figs. 7 & 8) is fitted with power-driven docking clamps 314 (shown in Figs. 7 & 9-11 but omitted from Fig. 8) by which the vessel 300 can temporarily moor itself to the floating platform 100 by grasping an outside rail member of the framework of the platform body 102, as shown in Fig. 11. (During such mooring of the vessel 300 to the floating platform 100, the anti-predation net 150 would normally be dismounted to allow unimpeded approach of the vessel 300.) While the vessel 300 is moored to the platform 100 by means of the clamps 314 in the version of the equipment shown in Figs. 9 & 10, pitch and yaw of the vessel 300 is accommodated by a hydraulic damper 315 through which the clamps 314 and tray-manipulating components (see below) are mounted on the outboard end of the manipulator 400.

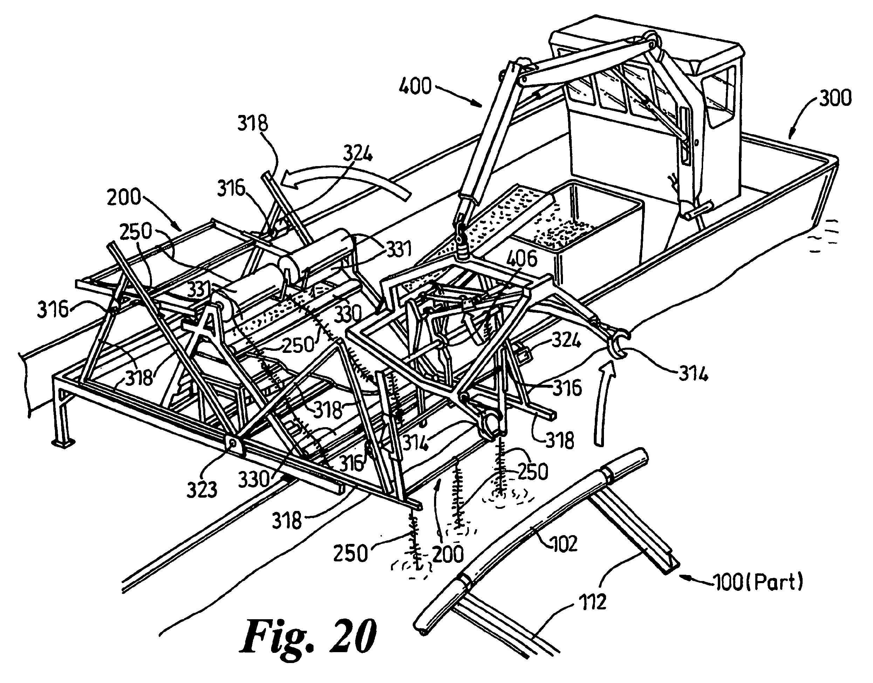

The manipulator 400 is shown in simplified form in Fig. 7, in greater detail in Figs. 9 and 10, and in modified form in Figs. 11-13. (Another modified form will subsequently be described with reference to Fig. 20). The manipulator 400 is an articulated jib structure very similar to the jib structures of self-propelled excavators (and economically is an adapted form of such jib structure) and may be a crane or knuckle boom jib with a swivel clamp attachment to match the dimensions of the outer perimeter tube of the platform. Relative motions of the various arms of the manipulator jib structure are achieved in known manner by hydraulically powered linear actuators (for relative pivoting movements) or rotary actuators (for relative swivelling movements) powered by a hydraulic power pack (not shown) that is part of the installed auxiliary equipment of the vessel 300. The outboard end of the manipulator 400 (detailed in Fig. 10) is fitted with a multi-tined fork 402 for fitting under and carrying the weight of a selected cultivation tray 200 (as shown in Figs. 9 and 10). The fork 402 is controllably rotated about a transverse axis by means of a linear actuator 404 such that the fork 402 can be inserted under a selected tray while aligned vertically downwards, and then rotated up to horizontal. The outboard end of the manipulator 400 is also fitted with a power-driven clamp 406 by which the selected tray 200 is securely clamped to the manipulator 400 while being handled by the manipulator 400. The clamp 406 is opened and closed by a respective linear actuator 408. Modified arrangements of the components 402-408 are detailed in Figs. 11-13.

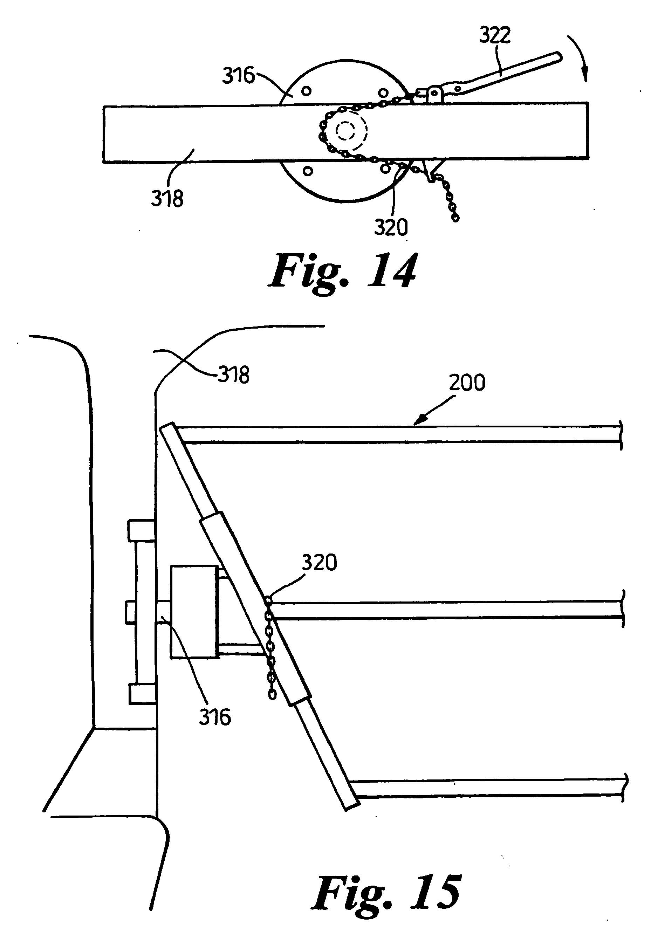

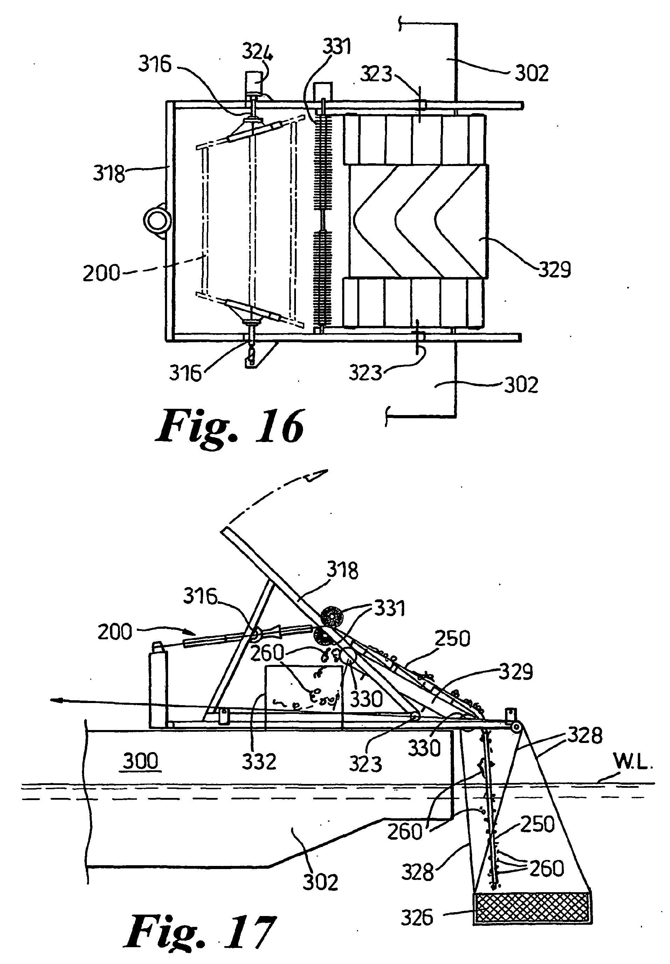

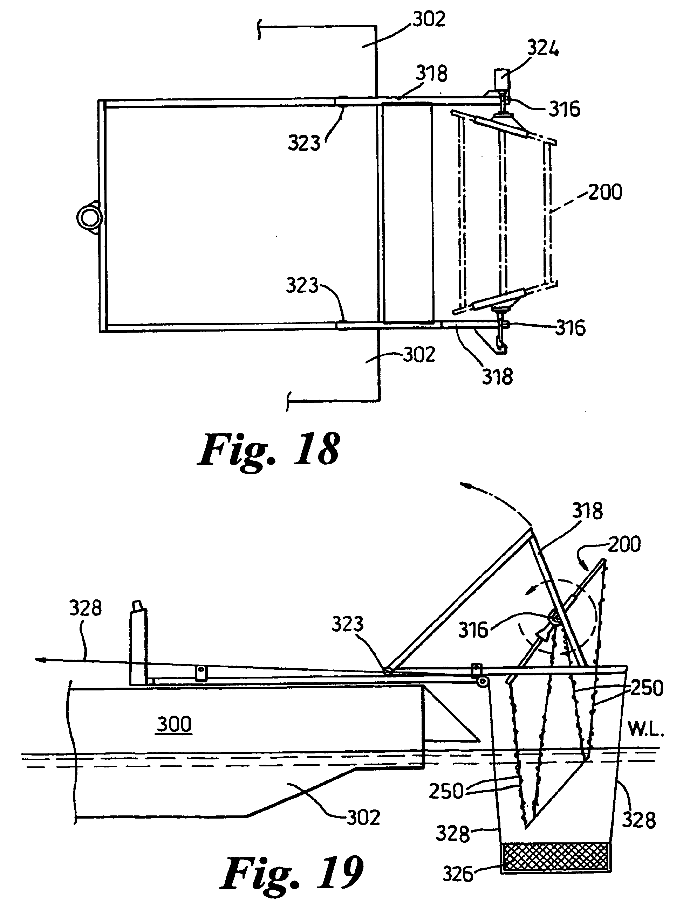

After the selected cultivation tray 200 is lifted off the platform 100 by controlled operation of the manipulator 400, the tray 200 is lifted over the bow of the vessel 300, with the rope substrates and the mussels growing thereon dangling into the open forward bay 310 without initially fouling any underwater structure of the vessel 300. The suspended tray 200 is then manoeuvred into contact with opposed pivots 316 mounted on either side of a tilting gantry 318 to which the mid-points of the tray side members 202 are then secured by chains 320 tightened by over-centre locking handles 322 (Figs. 14 and 15). The pivots 316 have a common transverse horizontal rotation axis that allows the pivot-mounted tray 200 to be rotated about a horizontal axis. As shown in Figs. 14 and 15, such rotation of the tray 200 is accomplished manually, but it is preferred that the tray is rotated by a suitable low-speed hydraulic motor 324 (Figs. 16 and 18). The gantry 318 rotates about deck-level pivots 323 in the manner of the stern 'A-frame' of a marine support vessel, under the control of a suitable gantry tilt actuator (not shown).

A catcher basket 326 is then deployed beneath the lower ends of the dangling rope substrates 250 (see Figs. 17 and 19) to catch mussels dislodged by operations about to be described. The catcher basket 326 is suspended on the ends of cables 328 that are paid out or pulled in as required by a vessel-mounted winch (not shown).

For harvesting operations on the tray 200, the gantry 318 with the pivot-mounted tray 200 is swung inboard as shown in Figs. 16 and 17. This drapes the rope substrates 250 over a deck-mounted conveyor belt 329 running on end rollers 330. The conveyor belt 329 lifts the substrates 250 and the attached mussels 260 out of the sea without dragging them over static structures that would tend to cause premature dislodgement of the mussels. The tray 200 is rotated about the transverse horizontal axis through the pivots 316 in a direction that is anti-clockwise as viewed in Fig. 17 so as to wind the substrates 250 around the tray 200. This action brings mussel-encrusted substrates 250 through an opposed pair of mussel-stripping rotary brushes 331 and over a gathering box 332 into which the mussels 260 are gathered by forced detachment from the ropes on which the mussels were cultivated. Prematurely dislodged mussels are retained by the catcher basket 326 for subsequent retrieval and decanting into the gathering box 332, which represents a significant increase in gathering efficiency in comparison to prior-art mussel gathering techniques that failed to recover prematurely dislodged crop. As an alternative to on-board removal of mussels 260 from the substrates 250 as they are wound around the pivot-mounted tray 200, the mussel-encrusted substrates 250 can be simply wound around the tray 200 and transported intact to a land-based processing plant where they can be stripped in sheltered safety. (Mussels dislodged during this ingathering of the substrates can still be recovered in the catcher basket 326 and the gathering box 332).

The harvesting vessel 300 and the vessel-mounted manipulator 400 can also be utilised for pre-harvesting husbandry operations during the cultivation phase, as will now be detailed with reference to Figs. 18 and 19. For this alternative use of the vessel and manipulator, the selected tray 200 is picked up from the platform 200 as before, and transferred to rotatable mounting on the pivots 316 as previously described. However, on this occasion the gantry 318 is swung outboard of the vessel 300 (compare the configuration in Figs. 18 and 19 with Figs. 16 and 17) to hang the pivot-mounted tray 200 directly over the previously deployed catcher basket 326. Cleaning and thinning procedures are carried out on the part-grown mussels 260 anchored on the substrates 250, with detached debris and thinned-out mussels landing in the catcher basket 326. During cleaning and thinning, the tray 200 is rotated as required for access to the substrates 250 distributed across the tray 200. When husbandry is completed, the substrates 250 can be fully unwound by appropriate reverse rotation of the tray 200, and the processed tray returned to its previous position on the platform 100. Alternatively, the tray 200 with its cleaned and thinned substrates 250 can be fully wound up for transfer to another location where the next stage of cultivation is to take place.

Fig. 20 is a composite perspective view from above and to one side of a modified form of the arrangements of Figs. 9-10, 11-13, and 16-19, with the two distinct inboard and outboard configurations of Figs. 16/17 and of Figs. 18/19 being mutually superimposed in the composite view of Fig. 20. For a description of the components, assemblies and operations of the Fig. 20 arrangement, reference should be made to the foregoing description of identical, similar, or analogous components, assemblies and operations in Figs. 9-10, 11-13, and 16-19.

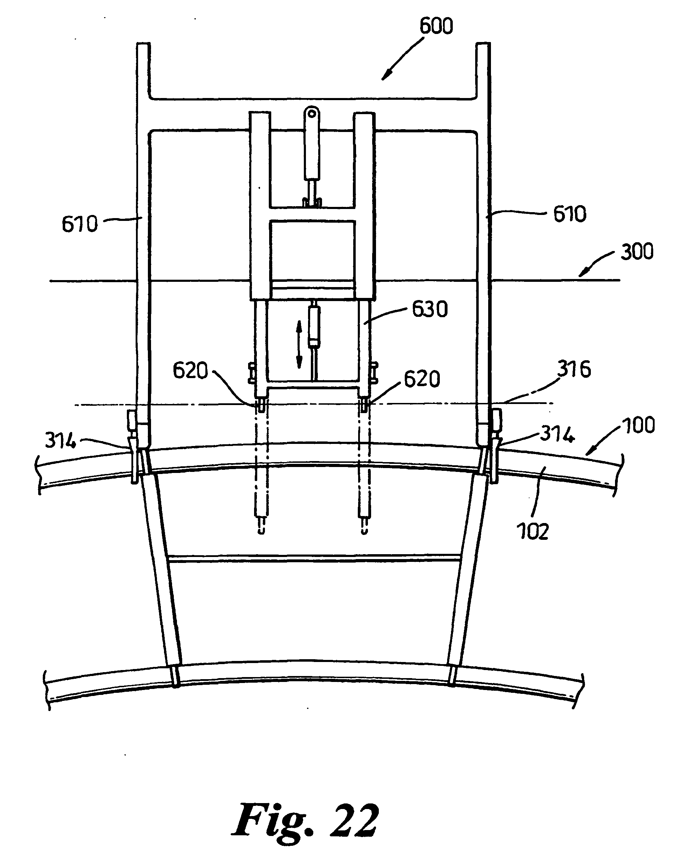

The harvesting apparatus and method described above may be adapted to be carried out in open water with a moderate sea state. This modified method and apparatus may also find particular application in husbandry operations. Reference is now made to figures 21 and 22 like numerals from the embodiments already described are used for ease of reference.

In this embodiment, the harvesting equipment is mounted on the deck of the vessel 300 having a crane or, more preferably a knuckle boom jib with a swivel clamp attachment 600 which matches the dimensions of the outer tube of the platform 100. The crane clamp is used to lift the outer tube clear of the water so that the inner tube lies on the surface. The crane is then slewed towards the vessel, where the outer tube is engaged against two docking guides 610. These guides act as a register for the cassette manipulator means which, in this embodiment, comprises two hooks 620, mounted on a pivoting telescopic arm 630 between the docking guides. When the tube is engaged the manipulator means are extended so that the cassette will be captured by grabbing means on the manipulator means. The platform can now be released from the crane leaving the cassette held by the grabbing means.

Once the cassette has been released from the platform it remains suspended with all stock lines 250 hanging vertically below the grabbing means. The cassette can then be raised on the telescopic arm 630 and transferred to the spooling axles 316, which in this embodiment comprise two saddles which provide support for the tapered sides of the cassette, locked in place with a lever, pin or other locking means. The axles are slowly rotated by motors, allowing the stock lines to be wound around the asymmetric axis of the cassette.

The spooling axles are mounted on arms 640 which allow operations in two positions. In the outboard position, newly spatted ropes can be unwound from the cassette without abrasion against the side of the vessel.

The inboard position is used when harvesting or carrying out husbandry. This allows easy access to pick off predators, thin out stock or add new substrates to the lines (such as clip on discs).

An airlift pump (not shown) can be used in conjunction with the collection basket 326 described above to collect drop off which occurs whilst harvesting. A rotary brush is mounted on the side of a hopper below the gunwale and slightly outboard. The bottom of the hopper has an air inlet which is fed with compressed air and vents through a large diameter pipe above sea level and to one side of the spooler. Stock drop off is discharged from the pipe into a collection basket 326.

In this embodiment, the sequence for deploying cassettes is as follows: two hydraulically mounted loading tines are raised/lowered into position, being the correct inclination to allow the cassette to be slotted between two hangers. The cassette is captured by grabbing means and removed from the spooling axle (or lifted from the deck) and lowered on the loading tines. The outer tube is lifted by the pipe clamp and located in the docking guides. The cassette is then pushed in between the hangers by the telescopic arm. Finally the platform is lifted clear of the docking guides and released from the clamp.

Spat collection may be facilitated by winding collector ropes onto the cassettes (an operation which can be carried out on shore). Spat collection can also be carried out on a surface platform or by suspending cassettes from traditional rafts or long lines. This technique also saves time and labour when dropping lines.

Conditioning of stock prior to grading can also be achieved by spooling the cassette and moving it to another location either in a rack mounted in the tidal zone between high and low water, or on shore in artificial conditions. Stock which are trained in this way have better keeping qualities and can reach more lucrative distant markets. It is also envisaged that spooled cassettes can be moved between sites to avoid toxin outbreaks.

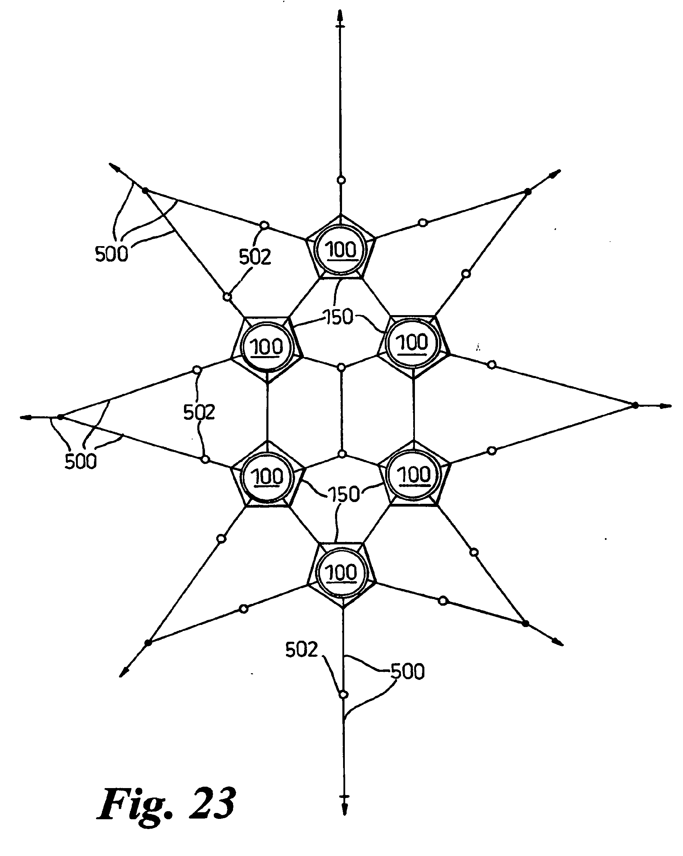

While Figs. 1 to 4 showed a single floating platform 100 for the cultivation and harvesting of mussels or other sessile bivalvia, advantage is preferably taken of favourable locations (e.g. with free tidal flows) by mooring several such platforms at that location collectively to form a sea-farm. In order to maintain the several platforms at optimum spacings within the sea-farm, and to prevent their collision or loss by drifting, the several platforms are preferably collectively moored in a regular array. By way of example, Fig. 23 shows a sea-farm in accordance with the invention. The sea-farm comprises an array of six floating platforms 100, each fitted with an anti-predation net 150 as shown in Fig. 4, and held by an array of mooring ropes 500 supported by attached buoys 502. Sea-farms comprising platform clusters with more or fewer than six platforms are also possible within the scope of the invention. One, some, or all of the platforms 100 in the sea-farm of Fig. 21 can be adapted for marine polyculture as described above with reference to Fig. 5, by the respective provision of a cage or other suitable fin-fish enclosure means.

It is anticipated that the platform as described above may find application as an industrial bio waste filter. In this application, nutrient rich waste water can be treated in tanks onshore, where various species of algae are used for the primary production stage.

The algae rich water is then discharged into the centre of an adapted seacage, which has an enclosed top and bottom. The cage can hold cassettes vertically around the perimeter, providing a dense biofilter, capable of extracting algae from the water.

Circulation can be enhanced by known means and the inner pipe of the platform can be used as a distribution manifold. Stock can be transferred to an open water site to purge residual toxins and finish the product prior to human consumption.

While certain modifications and variations of the invention have been described above, the invention is not restricted thereto, and other modifications and variations can be adopted without departing from the scope of the invention.

## Claims

1. A floating platform (100) for the cultivation of sessile bivalvia or other sedentary marine creatures or plants cultivated on ropes or nets or other substrate means (250) suspended in water from at least one support means (200) detachably mounted on the floating platform (100), the platform (100) comprising a generally annular buoyant body (102) free of a central hub, the body being constructed or adapted for individually detachably mounting thereon a distributed array of a plurality of support means (112) each suspending a respective substrate means (200) therefrom.

2. A floating platform according to claim 1, wherein the platform body (102) is provided with controllably variable buoyancy means (106) operable for selective adjustment of the buoyancy of the platform (100) for compensating for varying masses of marine creatures carried by the platform.

3. A floating platform according to claim 1 or 2, wherein the platform body (102) is provided with net attachment means (104, 152) for the attachment of a protective net (150) to surround the platform, substrate means carried thereby and creatures attached to the substrate means (200), the net (150) being dimensioned and shaped to protect the creatures from predation.

4. A floating platform according to any one of claims 1 to 3, wherein the platform (100) is provided with mooring attachment means for the attachment of mooring means (110) functioning in use to moor the platform substantially at a predetermined offshore location.

5. A floating platform according to any one of claims 1 to 4, wherein the platform (100) is provided with an enclosure for mounting support means (200) around the periphery thereof.

6. Marine polyculture equipment wherein a plurality of different marine species are cultivated and/or harvested within a common cultivation/harvesting site that is at least partially submerged in water, the equipment comprising fin-fish enclosure means (160) adapted to be at least partially submerged in water during use of the equipment, and means for cultivation and/or harvesting of sedentary filter-feeding marine creatures comprising a floating platform (100) according to any one of claims 1 to 5 in the water adjacent the periphery of the fin-fish enclosure means.

7. Marine polyculture equipment according to claim 6, wherein the fin-fish enclosure means comprises a cage (160) that is at least partially submerged in use.

8. Marine polyculture equipment according to any one of claims 6 to 7, wherein the marine polyculture equipment further comprises controllable immersion means for temporarily increasing the immersion depth of the fin-fish enclosure means (160) at selected times.

9. Marine polyculture equipment according to any one of claims 6 to 8, wherein the marine polyculture equipment further comprises wave-powered means for generating an upwelling in the ambient water, and where the equipment comprises a floating platform (100) according to any one of claims 1 to 5 provided with buoyancy means (106), the wave-powered means may comprise diaphragm means mounted on the buoyancy means (106) and disposed to be acted upon by waves in the surface of the water in which the buoyancy means (106) are at least partially immersed in use.

10. Marine polyculture equipment according to any one of claims 6 to 9, wherein the water within which the marine polyculture equipment is operated is fresh water that is retained within natural geographical features or within an artificial water retaining means or within a combination of such water-retaining means.

11. Marine polyculture equipment according to any one of claims 6 to 9, wherein the water within which the marine polyculture equipment is operated is sea water.

12. Marine polyculture equipment comprising a plurality of floating platforms (100) according to any one of claims 1 to 5, the platforms being mutually spaced apart and distributed in an array, the platforms being retained in the array by mutually interextending tether means (502).

13. Marine polyculture equipment according to claim 12, wherein the sea-farm is provided with mooring attachment means for the attachment of mooring means (500) functioning in use to moor the sea-farm substantially at a predetermined offshore location.

14. A sea farm comprising a plurality of floating platforms according to any one of claims 1-5, the platforms being mutually spaced apart and distributed in an array and retained by mutually interextending tether means.

## Patentansprüche

1. Eine Schwimmplattform (100) zur Kultivierung von sessilen Bivalvia oder anderen sedentären Meereslebewesen oder -pflanzen, die auf Tauen oder Netzen oder anderen Substratmitteln (250), die aufgehängt in Wasser von mindestens einem Stützmittel (200), das abnehmbar auf der Schwimmplattform (100) montiert ist, kultiviert werden, wobei die Plattform (100) einen im Allgemeinen ringförmigen schwimmfähigen Körper (102) ohne zentralen Mittelpunkt aufweist, wobei der Körper konstruiert oder angepasst ist, um eine verteilte Anordnung einer Vielzahl von Stützmitteln (112), wobei jedes ein entsprechendes Substratmittel (200) davon aufhängt, daran individuell abnehmbar zu montieren.

2. Schwimmplattform gemäß Anspruch 1, wobei der Körper der Plattform (102) mit Mitteln mit steuerbar variabler Schwimmfähigkeit (106) versehen ist, die zur selektiven Einstellung der Schwimmfähigkeit der Plattform (100) betrieben werden können, um variierende Massen an Meereslebewesen, die durch die Plattform getragen werden, auszugleichen.

3. Schwimmplattform gemäß Anspruch 1 oder 2, wobei der Körper der Plattform (102) mit Netzanbringungsmitteln (104, 152) zur Anbringung eines schützenden Netzes (150), um die Plattform zu umgeben, bereitgestellt wird, wobei die Substratmittel und an den Substratmitteln (200) angebrachte Lebewesen **dadurch** getragen werden, wobei das Netz (150) bemessen und geformt ist, um die Lebewesen vor Raub zu schützen.

4. Schwimmplattform gemäß einem der Ansprüche 1 bis 3, wobei die Plattform (100) mit Vertäuungsanbringungsmitteln zur Anbringung von Vertäuungsmitteln (110) bereitgestellt ist, die bei Verwendung funktionieren, um die Plattform im Wesentlichen an einer vorbestimmten vor der Küste liegenden Stelle zu vertäuen.

5. Schwimmplattform gemäß einem der Ansprüche 1 bis 4, wobei die Plattform (100) mit einer Einschließung zum Montieren der Stützmittel (200) um die Peripherie davon bereitgestellt wird.

6. Meerespolykulturausrüstung, wobei eine Vielzahl von unterschiedlichen Meeresspezien innerhalb eines gemeinsamen Kultivierungs-/Erntegebiets, das zumindest teilweise in Wasser eingetaucht ist, kultiviert und/oder geerntet werden, wobei die Ausrüstung Mittel zur Einschließung von Flossenfischen (160), die angepasst sind, um während der Verwendung der Ausrüstung zumindest teilweise in Wasser eingetaucht zu sein, beinhaltet, und Mittel zur Kultivierung und/oder Ernte von sedentären Filter gefütterten Meereslebewesen, die eine Schwimmplattform (100) gemäß einem der Ansprüche 1 bis 5 in dem Wasser angrenzend an der Peripherie der Mittel zur Einschließung von Flossenfischen beinhalten.

7. Meerespolykulturausrüstung gemäß Anspruch 6, wobei die Mittel zur Einschließung von Flossenfischen einen Käfig (160) beinhalten, der bei Verwendung zumindest teilweise eingetaucht ist.

8. Meerespolykulturausrüstung gemäß einem der Ansprüche 6 bis 7, wobei die Meerespolykulturausrüstung ferner steuerbare Untertauchmittel zur vorübergehenden Steigerung der Tiefe des Untertauchens der Mittel zur Einschließung von Flossenfischen (160) zu ausgewählten Zeiten beinhaltet.

9. Meerespolykulturausrüstung gemäß einem der Ansprüche 6 bis 8, wobei die Meerespolykulturausrüstung ferner durch Wellen angetriebene Mittel zum Erzeugen eines Auftriebs in dem Umgebungswasser beinhaltet, und wobei die Ausrüstung eine Schwimmplattform (100) gemäß einem der Ansprüche 1 bis 5 beinhaltet, die mit Mitteln zur Schwimmfähigkeit (106) versehen ist, wobei die durch Wellen angetriebenen Mittel Membranmittel beinhalten können, die auf den Mitteln zur Schwimmfähigkeit (106) montiert sind, und angeordnet sind, damit die Wellen in der Oberfläche des Wassers, in dem die Mittel zur Schwimmfähigkeit (106) bei Verwendung zumindest teilweise untergetaucht sind, darauf wirken können.

10. Meerespolykulturausrüstung gemäß einem der Ansprüche 6 bis 9, wobei das Wasser, innerhalb dessen die Meerespolykulturausrüstung betrieben wird, Süßwasser ist, das innerhalb natürlicher geographischer Eigenschaften oder innerhalb Mittel zum Halten künstlicher Gewässer oder innerhalb einer Kombination solcher Mittel zum Halten von Wasser gehalten wird.

11. Meerespolykulturausrüstung gemäß einem der Ansprüche 6 bis 9, wobei das Wasser, innerhalb dessen die Meerespolykulturausrüstung betrieben wird, Meerwasser ist.

12. Meerespolykulturausrüstung, die eine Vielzahl von Schwimmplattformen (100) gemäß einem der Ansprüche 1 bis 5 beinhaltet, wobei die Plattformen wechselseitig mit Abstand angeordnet und in einer Anordnung vereilt sind, wobei die Plattformen durch sich wechselseitig dazwischen erstreckende Spannseilmittel (502) in der Anordnung gehalten werden.

13. Meerespolykulturausrüstung gemäß Anspruch 12, wobei die Meeresfarm mit Vertäuungsanbringungsmitteln zur Anbringung von Vertäuungsmitteln (500) versehen ist, die bei Verwendung funktionieren, um die Meeresfarm im Wesentlichen an einer vorbestimmten vor der Küste liegenden Stelle zu vertäuen.

14. Eine Meeresfarm, die eine Vielzahl von Schwimmplattformen gemäß einem der Ansprüche 1-5 beinhaltet, wobei die Plattformen durch wechselseitig dazwischen erstreckende Spannseilmittel wechselseitig mit Abstand angeordnet und in einer Anordnung verteilt sind und gehalten werden.

## Revendications

1. Une plate-forme flottante (100) destinée à l'élevage de bivalves sessiles ou autres organismes, ou plantes, marins sédentaires élevés sur des cordes ou des filets ou d'autres moyens formant substrats (250) en suspension dans l'eau depuis au moins un moyen de support (200) monté de façon amovible sur la plate-forme flottante (100), la plate-forme (100) comprenant un corps flottable généralement annulaire (102) dépourvu de moyeu central, le corps étant construit ou adapté afin de monter individuellement de façon amovible sur celui-ci un ensemble réparti d'une pluralité de moyens de support (112), chacun ayant en suspension un moyen formant substrat respectif (200) depuis celui-ci.

2. Une plate-forme flottante selon la revendication 1, dans laquelle le corps de plate-forme (102) est muni de moyens de flottabilité variables de façon contrôlable (106) pouvant être actionnés pour un réglage sélectif de la flottabilité de la plate-forme (100) afin de compenser les masses variables d'organismes marins portés par la plate-forme.

3. Une plate-forme flottante selon la revendication 1 ou 2, dans laquelle le corps de plate-forme (102) est muni d'un moyen d'attache de filet (104, 152) pour l'attache d'un filet de protection (150) pour entourer la plate-forme, un moyen formant substrat porté par celui-ci et des organismes attachés au moyen formant substrat (200), le filet (150) étant dimensionné et formé pour protéger les espèces d'une prédation.

4. Une plate-forme flottante selon n'importe laquelle des revendications 1 à 3, dans laquelle la plate-forme (100) est munie d'un moyen d'attache d'amarrage pour l'attache d'un moyen d'amarrage (110) fonctionnant en utilisation pour amarrer la plate-forme substantiellement à un emplacement en mer prédéterminé.

5. Une plate-forme flottante selon n'importe laquelle des revendications 1 à 4, dans laquelle la plate-forme (100) est munie d'un enclos pour monter le moyen de support (200) autour de la périphérie de celui-ci.

6. Equipement de polyculture marin dans lequel une pluralité de différentes espèces marines sont élevées et/ou récoltées au sein d'un site d'élevage/de récolte commun qui est au moins partiellement submergé dans l'eau, l'équipement comprenant un moyen formant enclos pour poissons à nageoires (160) adapté pour être au moins partiellement submergé dans l'eau lors de l'utilisation de l'équipement, et un moyen destiné à l'élevage et/ou à la récolte d'organismes marins se nourrissant par filtration sédentaires comprenant une plate-forme flottante (100) selon n'importe laquelle des revendications 1 à 5 dans l'eau de façon adjacente à la périphérie du moyen formant enclos pour poissons à nageoires.

7. Equipement de polyculture marin selon la revendication 6, dans lequel le moyen formant enclos pour poissons à nageoires comprend une cage (160) qui est au moins partiellement submergée en utilisation.

8. Equipement de polyculture marin selon n'importe laquelle des revendications 6 à 7, dans lequel l'équipement de polyculture marin comprend en outre un moyen d'immersion contrôlable destiné à accroître temporairement la profondeur d'immersion du moyen formant enclos pour poissons à nageoires (160) à des moments sélectionnés.

9. Equipement de polyculture marin selon n'importe laquelle des revendications 6 à 8, dans lequel l'équipement de polyculture marin comprend en outre un moyen entraîné par les vagues destiné à générer une remontée d'eau dans l'eau ambiante, et où l'équipement comprend une plate-forme flottante (100) selon n'importe laquelle des revendications 1 à 5 munie de moyens de flottabilité (106), le moyen entraîné par les vagues pouvant comprendre un moyen formant diaphragme monté sur des moyens de flottabilité (106) et disposé pour que les vagues agissent sur celui-ci sur la surface de l'eau dans laquelle les moyens de flottabilité (106) sont au moins partiellement immergés en utilisation.

10. Equipement de polyculture marin selon n'importe laquelle des revendications 6 à 9, dans lequel l'eau au sein de laquelle l'équipement de polyculture marin est actionné est de l'eau douce qui est retenue au sein de caractéristiques géographiques naturelles ou au sein d'un moyen de retenue d'eau artificiel ou au sein d'une combinaison de moyens de retenue d'eau de la sorte.

11. Equipement de polyculture marin selon n'importe laquelle des revendications 6 à 9, dans lequel l'eau au sein de laquelle l'équipement de polyculture marin est actionné est de l'eau de mer.

12. Equipement de polyculture marin comprenant une pluralité de plates-formes flottantes (100) selon n'importe laquelle des revendications 1 à 5, les plates-formes étant mutuellement espacées les unes des autres et réparties dans un ensemble, les plates-formes étant retenues dans l'ensemble par des moyens formant sangles (502) s'étendant mutuellement entre celles-ci.

13. Equipement de polyculture marin selon la revendication 12, dans lequel la ferme en mer est munie d'un moyen d'attache d'amarrage pour l'attache d'un moyen d'amarrage (500) fonctionnant en utilisation pour amarrer la ferme en mer substantiellement à un emplacement en mer prédéterminé.

14. Une ferme en mer comprenant une pluralité de plates-formes flottantes selon n'importe laquelle des revendications 1 à 5, les plates-formes étant mutuellement espacées les unes des autres et réparties dans un ensemble et retenues par des moyens formant sangles s'étendant mutuellement entre celles-ci.
